# EUROPÄISCHE PATENTANMELDUNG

(11) **EP 2 447 431 A2**
(43) Veröffentlichungstag der Anmeldung: **02.05.2012**
(21) Anmeldenummer: 11008694.9
(22) Anmeldetag: 31.10.2011
(51) Int. Cl.: E04B 1/80

(54) **Dämmmaterial**

(30) Priorität: 02.11.2010 CH 18322010
(71) Anmelder: swisspor Management AG, 6312 Steinhausen (CH)
(72) Erfinder: Roth, Heinz, 8853 Lachen (CH)
(74) Vertreter: Münch, Martin Walter

(57) **Zusammenfassung**

Die Erfindung betrifft ein Verfahren zur Herstellung eines Dämmmaterials, welches ein von einem funktionalen Material (2) durchsetztes Kunststoffschaummaterial (1) ist. Dabei wird in einem ersten Schritt eine Platte aus einem offenporigen Kunststoffschaummaterial bereitgestellt. Sodann wird in einem zweiten Schritt ein funktionales Material im flüssigen Zustand oder eine Schlämme bzw. Suspension enthaltend ein funktionales Material in die Poren des Kunststoffschaummaterials eingebracht bzw. eingeschlämmt, derart, dass diese durchgängig zumindest teilweise mit dem funktionalen Material gefüllt sind. In einem dritten Schritt wird das in den Poren befindliche funktionale Material ausgehärtet bzw. die in den Poren befindliche, das funktionale Material enthaltende Schlämme bzw. Suspension getrocknet.

Durch die Erfindung wird es möglich, bestimmte Materialeigenschaften von Dämmmaterialien aus Kunststoffschaum gezielt zu verbessern.

## Beschreibung

Die vorliegende Erfindung betrifft ein Verfahren zur Herstellung eines Dämmmaterials, ein Dämmmaterial hergestellt mit dem Verfahren sowie eine Dämmplatte mit einem solchen Dämmmaterial gemäss den Oberbegriffen der unabhängigen Patentansprüche.

Die verschiedenen heute bekannten Dämmmaterialien weisen unterschiedliche Materialeigenschaften auf, welche, je nach Anwendungsgebiet und Einbausituation, mehr oder weniger vorteilhaft bzw. verbesserungswürdig sind. Entsprechend besteht ein anhaltendes Bedürfnis zur Optimierung dieser Dämmstoffe bezüglich spezifischer Materialeigenschaften, wie z.B. Wärmeisolationsfähigkeit und Feuchtigkeitstransportfähigkeit.

So werden beispielsweise Gebäudewände üblicherweise auf der Aussenseite des Mauerwerks wärmegedämmt, so dass die Temperatur im Mauerwerk relativ hoch ist, da der Temperaturabfall im Wesentlichen in der aussenliegenden Dämmschicht stattfindet. Im Fall einer Wärmedämmung auf der Innenseite der Gebäudewand findet der Temperaturabfall jedoch im Wesentlichen in der innenliegenden Dämmschicht statt, so dass die Temperatur des Mauerwerks typischerweise viel niedriger ist als bei einer Aussendämmung. Der Dampfdruckgradient ist dann höher und es gelangt mehr Feuchtigkeit in die Wand. Zudem befindet sich die Kondensatebene in der Nähe der Dämmschicht auf der Innenseite der Wand, was die Abtrocknung des Mauerwerks bei Kondensatausfall erschwert und längerfristig zu Bauschäden führen kann.

Um diesem Problem zu begegnen, werden Innendämmungen heute oftmals aus kapillaraktiven Dämmmaterialien erstellt, welche einen kapillaren Feuchtigkeitstransport vom Mauerwerk zur Innenseite der Dämmung ermöglichen und damit eine Abtrocknung der Gebäudewand nach innen hin.

So ist es beispielsweise bekannt, Innendämmungen aus Calciumsilikatplatten zu erstellen, welche mittels eines kapillaraktiven Klebemörtels auf die Innenseite der Gebäudewand aufgeklebt werden. Derartige Dämmplatten weisen jedoch den Nachteil auf, dass ihre Wärmedämmleistung deutlich niedriger ist als die Wärmedämmleistung herkömmlicher für die Erstellung von Aussendämmungen eingesetzter Dämmstoffe, bei einem vergleichsweise hohen Preis.

Aus DE 10 2007 040 938 A1 sind Dämmplatten zur Innendämmung von Gebäudewänden bekannt, bei denen der plattenförmige Grundkörper aus einem herkömmlichen Dämmstoff gebildet ist und mit einer Vielzahl von Durchbrüchen versehen ist, welche mit einem kapillaraktiven Material gefüllt sind. Derartige Dämmplatten weisen zwar eine deutlich bessere Wärmedämmleistung auf als Dämmplatten aus Calciumsilikat, sind jedoch nur im Bereich dieser Durchbrüche kapillaraktiv und ermöglichen zudem keine kapillare Querverteilung der transportierten Feuchtigkeit.

Grundsätzlich besteht zudem ein anhaltendes Bedürfnis, die Wärmeisolationsfähigkeit der bekannten Dämmstoffe weiter zu verbessern bzw. neue Dämmstoffe mit besseren Wärmeisolationswerten zu entwickeln.

Es stellt sich daher die Aufgabe, Dämmmaterialien und Dämmplatten mit spezifischen verbesserten Materialeigenschaften, insbesondere bezüglich der Wärmeisolationsfähigkeit und/oder der Feuchtigkeitstransportfähigkeit, sowie Verfahren zu deren Herstellung zur Verfügung zu stellen, welche insbesondere die zuvor genannten Nachteile des Standes der Technik nicht aufweisen oder zumindest teilweise vermeiden.

Diese Aufgabe wird von dem Verfahren, dem Dämmmaterial sowie der Dämmplatte gemäss den unabhängigen Patentansprüchen gelöst.

Ein erster Aspekt der Erfindung betrifft ein Verfahren zur Herstellung eines Dämmmaterials, welches ein von einem funktionalen Material durchsetztes Kunststoffschaummaterial ist bzw. einer Dämmplatte, welche aus einem solchen Dämmmaterial gebildet ist oder eine Dämmschicht aus einem solchen Dämmmaterial aufweist.

Als mit dem funktionalen Material "durchsetzt" wird das Kunststoffschaummaterial dann angesehen, wenn dessen strukturelle Hohlräume bzw. Poren durchgängig zumindest teilweise mit dem funktionalen Material gefüllt sind. Das funktionale Material erstreckt sich also durchgängig in allen Richtungen durch das Kunststoffschaummaterial und füllt dabei zumindest teilweise dessen strukturellen Hohlräume bzw. Poren.

Unter einem "funktionalen Material" wird hier ein Material verstanden, welches eine bestimmte Eigenschaft (Funktionalität) aufweist, welche beim Kunststoffschaummaterial nicht in gleichem Masse vorhanden ist und infolge der Durchsetzung des Kunststoffschaummaterials mit dem funktionalen Material dazu führt, dass diese bestimmte Eigenschaft beim durchsetzten Kunststoffschaummaterial deutlich besser ist als beim nichtdurchsetzten Kunststoffschaummaterial.

Beim erfindungsgemässen Verfahren wird in einem ersten Schritt eine Platte oder ein Block aus einem offenporigen Kunststoffschaummaterial bereitgestellt.

Sodann wird in einem zweiten Schritt ein funktionales Material im flüssigen Zustand oder eine Schlämme bzw. Suspension enthaltend ein funktionales Material in die strukturellen Hohlräume bzw. Poren des Kunststoffschaummaterials eingebracht bzw. eingeschlämmt, derart, dass diese Hohlräume bzw. Poren durchgängig zumindest teilweise mit dem flüssigen funktionalen Material oder der Schlämme bzw. Suspension enthaltend das funktionale Material gefüllt sind. Das flüssige funktionale Material oder die Schlämme bzw. Suspension enthaltend das funktionale Material erstreckt sich also durchgängig in allen Richtungen durch die Platte oder den Block aus Kunststoffschaummaterial hindurch und füllt dabei zumindest teilweise dessen strukturellen Hohlräume bzw. Poren.

In einem dritten Schritt wird das in den strukturellen Hohlräumen bzw. Poren befindliche funktionale Material ausgehärtet bzw. die in den strukturellen Hohlräumen bzw. Poren befindliche, das funktionale Material enthaltende Schlämme bzw. Suspension getrocknet. Durch die Erfindung wird es möglich, bestimmte Materialeigenschaften von Dämmmaterialien aus Kunststoffschaum gezielt zu verbessern und es wird möglich, bestehende Kunststoffschaummaterialien in Dämmmaterialien umzuwandeln, welche ein von einem funktionalen Material durchsetztes Kunststoffschaummaterial sind.

Dabei ist es bevorzugt, dass das Einbringen des flüssigen funktionalen Materials bzw. der das funktionale Material enthaltenden Schlämme bzw. Suspension unter Beaufschlagung der Platte oder des Blocks mit einem Überdruck und/oder Vakuum erfolgt. Auf diese Weise ist es möglich, auch relativ dicke Platten bzw. Blöcke eines Kunststoffschaummaterials mit dem erfindungsgemässen Verfahren in ein mit einem funktionalen Material durchsetztes Kunststoffschaummaterial umzuwandeln.

In einer bevorzugten Ausführungsform des Verfahrens wird eine gesägte Platte oder ein gesägter Block aus expandiertem Polystyrol bereitgestellt. Dieses Material ist im Bereich der Gebäudewärmedämmung etabliert und eignet sich besonders gut für das Einschlämmen von funktionalem Material in flüssigem Zustand oder als Schlämme bzw. Suspension.

In einer weiteren bevorzugten Ausführungsform des Verfahrens wird eine Schlämme auf Kalk- oder Zementbasis oder werden im ausgehärteten Zustand kapillaraktive organische Fasern, wie z.B. Cellulosefasern oder polymere Hohlfasern, im flüssigen Zustand in die Poren des Kunststoffschaummaterials eingebracht bzw. eingeschlämmt. Schlämme auf Kalk- oder Zementbasis sind kostengünstig und ermöglichen eine gute mechanische und kapillare Anbindung des fertigen Dämmmaterials an mineralische Kleber- und Putzschichten. Die mit ihnen gebildeten Dämmplatten sind steif. Die Verwendung von kapillaraktiven Polymeren eröffnet hingegen die Möglichkeit, mit dem erfindungsgemässen Verfahren biegeelastische erfindungsgemässe Dämmplatten herzustellen.

In noch einer weiteren bevorzugten Ausführungsform des Verfahrens wird eine Schlämme bzw. Suspension enthaltend granulares Aerogel und/oder pyrogene Kieselsäure in die Poren des Kunststoffschaummaterials eingebracht bzw. eingeschlämmt.

Ein zweiter Aspekt der Erfindung betrifft ein Dämmmaterial, welches mit dem Verfahren gemäss dem ersten Aspekt der Erfindung hergestellt ist.

Derartige Dämmmaterialien weisen gegenüber den Kunststoffschaummaterialien, welche als Ausgangsbasis bei ihrer Herstellung verwendet werden (das anspruchsgemässe als Platte oder Block bereitgestellte offenporige Kunststoffschaummaterial), bestimmte verbesserte Materialeigenschaften auf.

In einer bevorzugten Ausführungsform ist das Dämmmaterial ein von einem kapillaraktiven Material durchsetztes Kunststoffschaummaterial. Unter einem "kapillaraktiven Material" wird hier ein Material verstanden, welches flüssiges Wasser an der Oberfläche ansaugt und im Materialvolumen verteilt, insbesondere auch in Richtung der nicht benetzten Oberfläche bei einseitigem Wasserkontakt. Derartige Dämmmaterialien sind vollständig und in alle Richtungen kapillaraktiv bei einer gleichzeitig guten Wärmedämmleistung, und sind kostengünstig herstellbar.

Dabei ist es bevorzugt, dass das Kunststoffschaummaterial von kapillaraktiven Fasern durchsetzt ist, und zwar bevorzugterweise von Polyamid-Fasern oder Zellulose-Fasern, welche in diesem Fall das anspruchsgemässe kapillaraktive Material bilden.

Auch ist es dabei bevorzugt, dass das Kunststoffschaummaterial von einem kapillaraktiven mineralischen Material, bevorzugterweise auf der Basis von Kalk und/oder Zement, durchsetzt ist.

In einer weiteren bevorzugten Ausführungsform ist das Dämmmaterial ein Kunststoffschaummaterial, welches von einem Material mit deutlich besserer Wärmeisolationsfähigkeit als das Kunststoffschaummaterial durchsetzt ist. Derartige Dämmmaterialien weisen eine besonders gute Wärmedämmleistung auf und sind kostengünstig herstellbar.

Dabei ist es bevorzugt, dass das Kunststoffschaummaterial von granularem Aerogel oder pyrogener Kieselsäure durchsetzt ist.

In noch einer weiteren bevorzugten Ausführungsform des Dämmmaterials ist das Kunststoffschaummaterial im Wesentlichen gleichmässig von dem funktionalen, bevorzugterweise kapillaraktiven oder besser wärmeisolierenden Material durchsetzt, so dass das Material überall im Wesentlichen identische Eigenschaften bezüglich der Funktionalität, bevorzugterweise bezüglich der Kapillaraktivität und/oder Wärmedämmleistung aufweist.

Bevorzugterweise handelt es sich bei dem Kunststoffschaummaterial um ein expandiertes Polystyrolschaummaterial. Derartige Materialien sind in der Gebäudewärmedämmung etabliert, weisen gute Wärmedämmeigenschaften und eine gute Anhaftungsfähigkeit für zementgebundene Klebemörtel und Putze auf und sind zudem kostengünstig.

Ein dritter Aspekt der Erfindung betrifft eine Dämmplatte, welche ein Dämmmaterial gemäss dem zweiten Aspekt der Erfindung umfasst oder von einem solchen Dämmmaterial gebildet ist. Solche Dämmplatten stellen bevorzugte Handelswaren gemäss der vorliegenden Erfindung dar.

In einer bevorzugten Ausführungsform der Dämmplatte weist diese eine Dämmschicht aus einem Kunststoffschaummaterial auf, welches mit einem kapillaraktiven Material durchsetzt ist, wobei die Dämmschicht auf einer oder beiden Aussenseiten mit einer Schicht aus einem kapillaraktiven Material beschichtet ist, derart, dass die jeweilige Schicht kapillaraktiv mit der Dämmschicht verbunden ist. Auf diese Weise wird die kapillaraktive Ankopplung der Dämmplatte an eine zu dämmende Gebäudewand und/oder an eine von dieser zu tragenden Putzschicht erleichtert und/oder intensiviert.

Dabei ist es von Vorteil, dass das kapillaraktive Material, welches die kapillaraktive Schicht bildet, identisch oder zumindest gattungsgleich ist zu dem kapillaraktiven Material, von welchem das Kunststoffschaummaterial des Dämmmaterials der Dämmschicht durchsetzt ist. Hierdurch lassen sich Kompatibilitätsprobleme von vornherein ausschliessen.

Weitere bevorzugte Ausführungen der Erfindung ergeben sich aus den abhängigen Ansprüchen sowie aus der nun folgenden Beschreibung anhand der Figuren. Dabei zeigen:
Fig. 1 einen schematischen Schnitt durch eine Platte aus einem erfindungsgemässen Dämmmaterial; und
Fig. 2 das Prinzip eines erfindungsgemässen Herstellverfahrens.

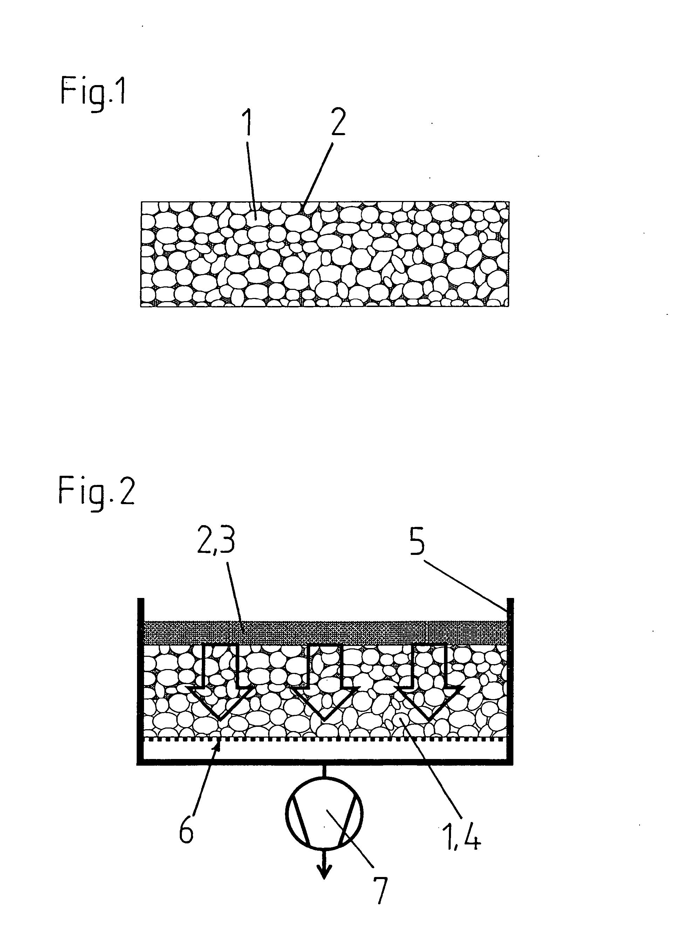

Fig. 1 zeigt einen Schnitt durch eine erfindungsgemässe Dämmplatte aus einem erfindungsgemässen Dämmmaterial. Wie zu erkennen ist, besteht die Dämmplatte aus einem expandierten Polystyrolschaummaterial 1, welches in seinen Poren gleichmässig mit einem funktionalen Material 2 durchsetzt ist, im vorliegenden Fall mit einem kapillaraktiven Füllstoff auf Kalk- oder Zementbasis, welcher als Schlämme in die Poren eingebracht und dann durch Trocknung in den Poren verfestigt wurde.

Fig. 2 zeigt das Prinzip eines erfindungsgemässen Verfahrens zur Herstellung der Dämmplatte aus Fig. 1. Dabei wird eine Dämmplatte 4 aus expandiertem Polystyrolschaummaterial derart in einem Behälter 5 angeordnet, dass die Begrenzungskanten der Dämmplatte 4 dicht an die Begrenzungswandungen des Behälters 5 angrenzen. Dabei liegt die Dämmplatte 4 mit ihrer Unterseite auf einem im Behälter 5 mit einem Abstand zum Behälterboden angeordneten Siebboden 6 auf. Sodann wird auf die Oberseite der

Dämmplatte 4 eine Schlämme bzw. Suspension enthaltend den Füllstoff auf Kalk- oder Zementbasis aufgebracht und der zwischen dem Behälterboden und dem Siebboden 6 gebildete Hohlraum mittels einer Vakuumpumpe 7 evakuiert. Durch die Druckdifferenz zwischen der Ober- und der Unterseite der Dämmplatte 4 wird die Schlämme bzw. Suspension 3 von der Oberseite her in die Poren der Dämmplatte 4 gedrückt (siehe die Pfeile). Das Vakuum wird so lange aufrechterhalten, bis die Schlämme bzw. Suspension 3 auf der Unterseite aus der Dämmplatte 4 austritt. Sodann wird die mit der Schlämme bzw. Suspension 3 durchsetzte Dämmplatte 4 aus dem Behälter 5 entnommen und getrocknet.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Patentansprüche ausgeführt werden kann.

## Patentansprüche

1. Verfahren zur Herstellung eines Dämmmaterials, welches ein von einem funktionalen Material (2) durchsetztes Kunststoffschaummaterial (1) ist oder zur Herstellung einer Dämmplatte, welche aus einem solchen Dämmmaterial gebildet ist oder eine Dämmschicht aus einem solchen Dämmmaterial aufweist, umfassend die Schritte:
a) Bereitstellen einer Platte (4) oder eines Blocks aus einem offenporigen Kunststoffschaummaterial (1);
b) Einbringen eines funktionalen Materials (2) im flüssigen Zustand oder in Form einer Schlämme (3) enthaltend ein solches Material in die Poren des Kunststoffschaummaterials (1), derart, dass diese durchgängig zumindest teilweise mit dem funktionalen Material gefüllt sind; und
c) Aushärten des in den Poren befindlichen funktionalen Materials oder Abtrocknen der in den Poren befindlichen Schlämme (3) enthaltend das funktionale Material (2).

2. Verfahren nach Anspruch 1, **dadurch gekennzeichnet, dass** das Einbringen des funktionalen Materials in flüssigen Zustand oder der Schlämme (3) enthaltend das funktionale Material (2) unter Beaufschlagung der Platte (4) oder des Blocks mit einem Überdruck und/oder Vakuum erfolgt.

3. Verfahren nach einem der vorangehenden Ansprüche, **dadurch gekennzeichnet, dass** eine gesägte Platte (4) oder ein gesägter Block aus expandiertem Polystyrol (1) bereitgestellt wird.

4. Verfahren nach einem der vorangehenden Ansprüche, **dadurch gekennzeichnet, dass** eine Schlämme (3) auf Kalk- oder Zementbasis oder ein im ausgehärteten Zustand kapillaraktives Polymer im flüssigen Zustand in die Poren des Kunststoffschaummaterials (1) eingebracht wird.

5. Verfahren nach einem der vorangehenden Ansprüche, **dadurch gekennzeichnet, dass** eine Schlämme enthaltend granulares Aerogel und/oder pyrogene Kieselsäure in die Poren des Kunststoffschaummaterials eingebracht wird.

6. Dämmmaterial, hergestellt mit dem Verfahren nach einem der vorangehenden Ansprüche.

7. Dämmmaterial nach Anspruch 6, **dadurch gekennzeichnet, dass** es ein von einem kapillaraktiven Material (2) durchsetztes Kunststoffschaummaterial (1) ist.

8. Dämmmaterial nach Anspruch 7, **dadurch gekennzeichnet, dass** das Kunststoffschaummaterial von kapillaraktiven Fasern durchsetzt ist, insbesondere von Polyamid-Fasern oder Zellulose-Fasern.

9. Dämmmaterial nach einem der Ansprüche 7 bis 8, **dadurch gekennzeichnet, dass** das Kunststoffschaummaterial (1) von einem kapillaraktiven mineralischen Material (2) durchsetzt ist, insbesondere auf der Basis von Kalk oder Zement.

10. Dämmmaterial nach einem der Ansprüche 6 bis 9, **dadurch gekennzeichnet, dass** das Kunststoffschaummaterial von einem funktionalen Material durchsetzt ist, welches eine höhere Wärmeisolationsfähigkeit aufweist als das Kunststoffschaummaterial.

11. Dämmmaterial nach Anspruch 10, **dadurch gekennzeichnet, dass** das Kunststoffschaummaterial von einem granularen Aerogel oder pyrogener Kieselsäure durchsetzt ist.

12. Dämmmaterial nach einem der Ansprüche 6 bis 11, **dadurch gekennzeichnet, dass** das Kunststoffschaummaterial (1) im Wesentlichen gleichmässig von dem funktionalen, insbesondere kapillaraktiven und/oder besser wärmeisolierenden Material (2) durchsetzt ist.

13. Dämmmaterial nach einem der Ansprüche 6 bis 12, **dadurch gekennzeichnet, dass** das Kunststoffschaummaterial (1) ein expandiertes Polystyrolschaummaterial ist.

14. Dämmplatte, **dadurch gekennzeichnet, dass** sie aus einem Dämmmaterial nach einem der Ansprüche 6 bis 13 gebildet ist oder eine Dämmschicht aus einem solchen Dämmmaterial aufweist.

15. Dämmplatte nach Anspruch 14, **dadurch gekennzeichnet, dass** sie eine Dämmschicht aus einem Dämmmaterial nach einem der Ansprüche 6, 8, 9, 10, 11, 12 oder 13 und nach Anspruch 7 aufweist, welche auf einer oder beiden Aussenseiten mit einer Schicht aus einem kapillaraktiven Material beschichtet ist.

16. Dämmplatte nach Anspruch 15, **dadurch gekennzeichnet, dass** das kapillaraktive Material, welches die kapillaraktive Schicht bildet, identisch oder zumindest gattungsgleich ist zu dem kapillaraktiven Material, von welchem das Kunststoffschaummaterial des Dämmmaterials der Dämmschicht durchsetzt ist.
